Europäisches Patentamt

European Patent Office

Office européen des brevets

(11) Publication number: **0 233 398**
**A1**

# EUROPEAN PATENT APPLICATION

(21) Application number: 86308151.9

(51) Int. Cl.⁴: **H05B 7/12** , **C21C 5/52**

(22) Date of filing: 21.10.86

(30) Priority: 27.11.85 BG 72518/85

(43) Date of publication of application:
26.08.87 Bulletin 87/35

(84) Designated Contracting States:
AT BE CH DE FR GB IT LI NL SE

(71) Applicant: N P P PO ELEKTROTERMIA
Botunez
BG-1770 Sofia(BG)

(72) Inventor: **Radev, Rumen Borisov**
**70 Rakovski St.**
**Sofia(BG)**
Inventor: **Peev, Vasil Georgiev**
**Komplex Borovo**
**Bl. 230, Sofia(BG)**
Inventor: **Vulchev, Alexander Yordanov**
**9 Blvd. E. Telman**
**Sofia(BG)**

(74) Representative: **Silverman, Warren et al**
**HASELTINE LAKE & CO. Hazlitt House 28**
**Southampton Buildings Chancery Lane**
**London WC2A 1AT(GB)**

(54) Graphite electrode with protective coating and method for its production.

(57) A graphite electrode with coating of a single-or multilayer metallic or metal-oxide protective coating and a coated-on graphite surface layer preferably comprising vinyl-acetate as binder and methyl cellulose as thickener, this surface layer being mechanically compacted, for example by means of a pressure roller or a vibration tool.

EP 0 233 398 A1

# GRAPHITE ELECTRODE WITH PROTECTIVE COATING AND METHOD FOR ITS PRODUCTION

This invention relates to a graphite electrode with a protective coating for use in a steelmaking electric arc furnace and to a method for its production.

It is known from, for example, Bulgarian Patent Specification No.11029 to provide graphite electrodes with protective coatings made of aluminium with alloying admixtures, which coatings are fused on by means of an electric arc. A disadvantage of such coatings is that, as a result of the direct contact required between the aluminium coating and the metal contact grip used with the electrode, there occurs a partial welding together of the aluminium coating to the metallic contact grip which is usually made of copper. The surface of the electrode becomes burnt away at the location of the contact grip and the contact grip must be replaced.

One solution to this problem proposed in Bulgarian Patent No.11732 is to use separate graphite segments between the graphite electrode with aluminium coating and the metal contact grip. A disadvantage of this method is that it is not always possible to adopt or it requires considerable reconstruction of the furnace in which the electrode is to be used.

It is indeed known from Bulgarian Patent No.11029 to apply a surface graphite layer onto the protective coating. As a result of the direct contact between the coating and the copper contact grip the welding together of contact grip and electrode surface is reduced, but cannot be fully avoided.

Finally, German Offenlegungsschrift No.3028348 discloses a graphite electrode with a coating of an aluminium alloy, which has a surface layer of graphite produced using a phenolic-novolac resin as binder, and polyvinyl alcohol as adhesive. In the production of the surface layer, the powdered graphite and resin are mixed with water in which the polyvinyl alcohol is dissolved, and there is thereby obtained a suspension of graphite and phenolic-novolac resin. This suspension is sprayed onto the protective coating. To achieve hardening of the surface layer, it is necessary to subject it to a temperature of from 150 to 180°C. The main drawback of this surface layer lies in its high contact resistance. In addition, because the phenolic-novolac resin is insoluble in water and it is necessary to use the resin in quantities of from 15 to 30% with respect to the graphite, considerable concentrations of non-conductive solids are introduced into the surface layer.

In a superhigh-power furnace with a current supply of 60 000 A, the power generated in the contact zone between a graphite coating layer and a copper contact grip reaches 120 to 180 kW; this causes local overheating resulting in the aluminium below becoming molten. The aluminium penetrates through the graphite layer and is alloyed with the copper. Another problem is the requirement for the temperature of the electrode during the application of the surface layer to be from 150 to 180°C. If the temperature is lower than 150°C the phenolic-novolac mixture does not cross-link, and the surface layer obtained has a very low mechanical strength and falls off to a great extent during transportation and handling of the electrodes.

The electrode described in the German Offenlegungsschrift does not show, on industrial use, any advantages as compared to the use of electrodes with which there is direct contact between metallic contact and aluminium coating and in general the use of graphite layers does not ensure a failure-free extended operation of the contact grips with electrodes provided with protective coatings.

It is therefore an object of this invention to provide a coherent protective coating on a metallic or metal-oxide surface layer of a graphite electrode and a method for the production of such coating.

According to one aspect of this invention, there is provided a graphite electrode with a protective coating comprising a fused-on single-or multilayer metallic or metal-oxide coating and a coated-on surface layer of graphite and containing a binder, characterised in that the surface graphite layer is mechanically compacted.

In preferred practice, the graphite layer comprises graphite with a grain size of up to 2 mm in a quantity of 200 to 2000 g/m², a water-soluble vinyl acetate binder in an amount of from 2 to 20% by weight, and methyl cellulose as thickener in an amount of from 1 to 10% by weight.

According to a second aspect of the invention, there is provided a method of providing a graphite electrode having a fused-on single or multi-layer metallic or metal-oxide coating with a coated-on surface layer of graphite containing a binder, characterised in that a graphite suspension containing a binder for the graphite is applied to the metallic or metal-oxide coating as a surface coating, and the graphite suspension is subjected to mechanical compaction while undergoing drying. Preferably the compaction is achieved by means of a pressure roller or a vibration tool. There is preferably used a suspension of 100 to 1500 g graphite with a grain size of up to 2 mm, from 20 to 150 g of a water-soluble vinyl-acetate adhesive, from 10 to 80 g of a water-soluble methyl cellulose thickener and from 1000 to 1600 g water for each 1 m² of surface area to be coated. The application of the graphite suspension is effected by spraying, spreading or another suitable means.

Advantages of the method according to this invention are that the compacted graphite layer reduces contact resistance by 3 to 5 times so that there is much reduced power generation at the contact heads. The graphite layer has a sufficient mechanical endurance to meet the service requirements for protected graphite electrodes.

For a better understanding of the invention, reference is now made to the following Examples.

EXAMPLE 1

A suspension of 700 g of graphite with a grain size of up to 1 mm in a solution of 35 g of a water-soluble vinyl-acetate adhesive and 25 g of water-soluble methyl cellulose in 1350 cm³ of water was applied by spraying to the outer surface of graphite electrodes protected by either a single-or multi-layer metallic protective coating.

In each case, the applied and not fully dried layer was compacted at an electrode surface temperature of about 100°C by rolling with a metal roller.

EXAMPLE 2

A suspension of 1000 g electro-graphite with a grain size of up to 1.5 mm in a solution of 45 g of a water-soluble vinyl-acetate adhesive and 20 g of water-soluble methyl cellulose and 1 litre of water was applied by spraying to the outer surface of graphite electrodes protected by a single-or multilayer metal-oxide coating.

In each case, the applied and not fully dried layer was compacted at an electrode surface temperature of about 100°C by application of a vibration tool to the electrode.

The graphite electrodes with compacted graphite protective coating layers according to Examples 1 and 2 showed a 3 to 5 times reduced resistance i.e. reduced voltage drop at the contact surfaces, which was only from 550 to 1300 mV at a current density of 50A/cm².

Claims

1. A graphite electrode with a protective coating comprising a fused-on single-or multilayer metallic or metal-oxide coating and a coated-on surface layer of graphite and containing a binder, characterised in that the surface graphite layer is mechanically compacted.

2. A graphite electrode according to claim 1, wherein the surface graphite layer comprises graphite with a grain size of up to 2 mm in a quantity of 200 to 2000 g/m², a water-soluble vinyl-acetate binder in an amount of from 2 to 20% by weight and methyl cellulose as thickener in an amount of from 1 to 20% by weight.

3. A method of providing a graphite electrode having a fused-on single or multi-layer metallic or metal-oxide coating with a coated-on surface layer of graphite containing a binder, characterised in that a graphite suspension containing a binder for the graphite is applied to the metallic or metal-oxide coating as a surface coating, and the graphite suspension is subjected to mechanical compaction while undergoing drying.

4. A method as claimed in claim 3, wherein the mechanical compaction is achieved by means of a pressure roller or a vibration tool.

5. A method as claimed in claim 3 or 4, wherein there is applied to each 1 m² of surface to be coated a graphite suspension which comprises from 100 to 1500 g graphite having a grain size of up to 2 mm, from 20 to 150 g of a water-soluble vinyl acetate adhesive, from 10 to 80 g of a water-soluble methyl cellulose thickener and from 1000 to 1600 g of water.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | DE-A-3 028 348 (C. CONRADTY NÜRNBERG)<br>* claims 1, 2 * | 1 | H 05 B 7/12<br>C 21 C 5/52 |
| A | DE-A-2 341 019 (FOSECO)<br>* pages 4, 5 * | | |
| A | DE-C- 261 554 (GESELLSCHAFT FÜR TEERVERWERTUNG)<br>* claim * | | |
| A | DE-B-1 271 007 (A.J. WALTSCHEV)<br>* column 6 * | | |
| A | DD-A- 107 867 (E. GRAFE et al.) | | |
| A,D | BG-A- 11 029 (A.J. WALTSCHEV) | | |
| A | EP-A-0 092 649 (C. CONRADTY NÜRNBERG) | | |

TECHNICAL FIELDS SEARCHED (Int. Cl.4)

H 05 B 7/12
C 21 C 5/52

The present search report has been drawn up for all claims

| Place of search | Date of completion of the search | Examiner |
|---|---|---|
| BERLIN | 25-02-1987 | SUTOR W |